# EUROPEAN PATENT APPLICATION

(11) **EP 4 549 668 A1**
(43) Date of publication of application: **07.05.2025**
(21) Application number: 23831262.3
(22) Date of filing: 22.06.2023
(51) Int. Cl.: E02F 9/16, B60J 1/00

(54) **CABIN AND WORK MACHINE**

(30) Priority: 30.06.2022 JP 2022105776
(71) Applicant: KUBOTA CORPORATION, Osaka-shi, Osaka 556-8601 (JP)
(72) Inventor: NISHIGORI Yoichi, Sakai-shi, Osaka 590-0908 (JP); HORII Hiroshi, Sakai-shi, Osaka 590-0908 (JP)
(74) Representative: Cabinet Beau de Loménie
(86) International application number: PCT/JP2023/023123
(87) International publication number: WO 2024/004818

(57) **Abstract**

To provide a cabin (5) mounted on a working machine (1), in which it is possible to make a cabin front window portion to be fully openable while preventing or reducing a decrease in head clearance in the cabin.

A cabin mounted on a working machine includes a protective frame (30) vertically provided around an operator's seat (6) included in the working machine; a roof (35) provided at an upper portion of the protective frame; and a front window (42) provided at a front portion of the protective frame. The front window is vertically divided into an upper window portion (51), which is coupled to a window frame (31) at the front portion of the protective frame so as to be movable toward a lower surface of the roof, and a lower window portion (52) detachably coupled to the window frame. The window frame includes a lower window stay (39A) to engage with and support a lower edge (52b) of the lower window portion, and a lock receiver (39B) to hold a side edge (52c) of the lower window portion in a closed position. The lower window portion includes at least one lock (55) to be fitted to the lock receiver when the side edge of the lower window portion is overlapped with the window frame.

## Description

### Technical Field

The present invention relates to a cabin included in a working machine such as a backhoe, and a working machine including the cabin.

### Background Art

Conventionally, a working machine disclosed in PTL 1 is known.

In a turning working machine disclosed in PTL 1, a front window of a cabin is configured to be divided into upper and lower portions, and a front window glass assembly (upper window portion) that is an upper half portion of the front window is configured to open toward a ceiling portion (upward of an operator's seat) along a rail portion of a cabin framework body surrounding the operator's seat.

### Citation List

### Patent Literature

PTL 1: Japanese Unexamined Patent Application Publication No. 2001-158230

### Summary of Invention

### Technical Problem

In the cabin mounted on this type of working machine, the upper half portion (upper window portion) of the front window opens to the inner upper side of the cabin as described above, and it is conceivable that a lower half portion (lower window portion) of the front window is also openable/closable. However, when the lower window portion is configured to open toward the ceiling portion along the rail portion similarly to the upper window portion, it is necessary to provide a space, at the ceiling portion, for accommodating the upper window portion and the lower window portion in an open state and the members belonging to both window portions, and hence there is a problem that a head clearance in the cabin is decreased by that amount.

The present invention is made to solve such a problem, and an object of the present invention is to make a cabin front window portion fully openable while preventing or reducing a decrease in head clearance in a cabin.

### Solution to Problem

The present invention employs the following technical means to attain the above-described object.

A cabin according to an example embodiment of the present invention is a cabin mounted on a working machine. The cabin includes a protective frame vertically provided around an operator's seat included in the working machine; a roof provided at an upper portion of the protective frame; and a front window provided at a front portion of the protective frame. The front window is vertically divided into an upper window portion, which is coupled to a window frame at the front portion of the protective frame so as to be movable toward a lower surface of the roof, and a lower window portion detachably coupled to the window frame. The window frame includes a lower window stay to engage with and support a lower edge of the lower window portion, and a lock receiver to hold a side edge of the lower window portion in a closed position. The lower window portion includes at least one lock to be fitted to the lock receiver when the side edge of the lower window portion is overlapped with the window frame.

The at least one lock may include a plurality of locks disposed on both left and right side edges of the lower window portion.

The lock or the lock receiver may include a lock release operation element to manually release fitting between the lock and the lock receiver, such that the fitting between the lock and the lock receiver is released by a release operation of the lock release operation element.

The lock may include a lock body to support the lock release operation element. The lock body may be provided on a rear portion of the lower window portion to bulge rearward.

The lock release operation element may be provided at a side portion of the lock body near a center in a left-right direction of the lower window portion. The release operation may be a pulling operation of moving the lock release operation element toward the center in the left-right direction of the lower window portion.

The lower window portion may include at least one first cutout to engage with the lower window stay and to inhibit the lower window portion from moving in a left-right direction.

The at least one first cutout may include, on the lower edge of the lower window portion, a pair of first cutouts spaced apart from each other in the left-right direction.

The cabin may include a wiper to wipe an outer surface of the upper window portion. The wiper may include a blade in contact with the outer surface, an arm to support the blade so as to be slidable along the outer surface, and a wiper drive to swing the arm. The wiper drive may be provided on the window frame, at a position close to an outside of the window frame in the left-right direction.

The wiper drive may be provided on the window frame, at a position lower than the upper window portion.

The window frame may include a wiper bracket to support the wiper drive. An upper edge of the wiper bracket may be aligned in the left-right direction with an upper edge of the lower window portion when in the closed position, and may be provided as an abutting end portion to abut against a lower edge of the upper window portion.

The wiper bracket may include a drive cover to cover the wiper drive. The lower window portion may include a second cutout to avoid interference with the drive cover when the lower window portion is attached to or detached from the window frame.

The lock may be fitted to the lock receiver by the side edge being pressed against the window frame from an inner side to an outer side of the cabin in a state in which the lower edge of the lower window portion is supported by the lower window stay.

A working machine includes a machine body; a working device provided at the machine body; and the above-described cabin.

### Advantageous Effects of Invention

According to the above-described cabin, it is possible to make the cabin front window portion fully openable while preventing or reducing a decrease in head clearance in the cabin.

### Brief Description of Drawings

[FIG. 1] FIG. 1 is a left front perspective view of a working machine.
[FIG. 2] FIG. 2 is a left side view of the working machine.
[FIG. 3] FIG. 3 is a front view of the working machine.
[FIG. 4] FIG. 4 is a rear view of the working machine.
[FIG. 5] FIG. 5 is a top view of a turning base.
[FIG. 6] FIG. 6 is a right side view of the turning base.
[FIG. 7] FIG. 7 is a rear view of a front frame and its surroundings.
[FIG. 8] FIG. 8 is a left rear perspective view of the front frame and a right frame, and their surroundings.
[FIG. 9] FIG. 9 is a left rear perspective view of a window opening and its surroundings in a state in which a front window is open.
[FIG. 10] FIG. 10 is a transverse sectional top view of a locking mechanism portion of a lower window portion and its surroundings.

### Description of Embodiments

Hereinafter, embodiments of the present invention will be described with reference to the drawings.

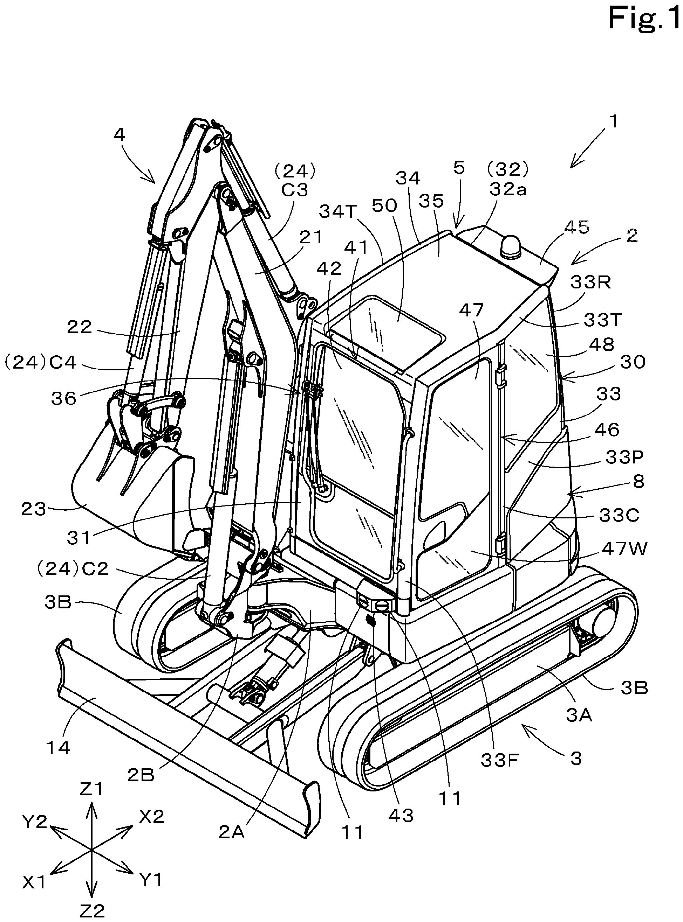

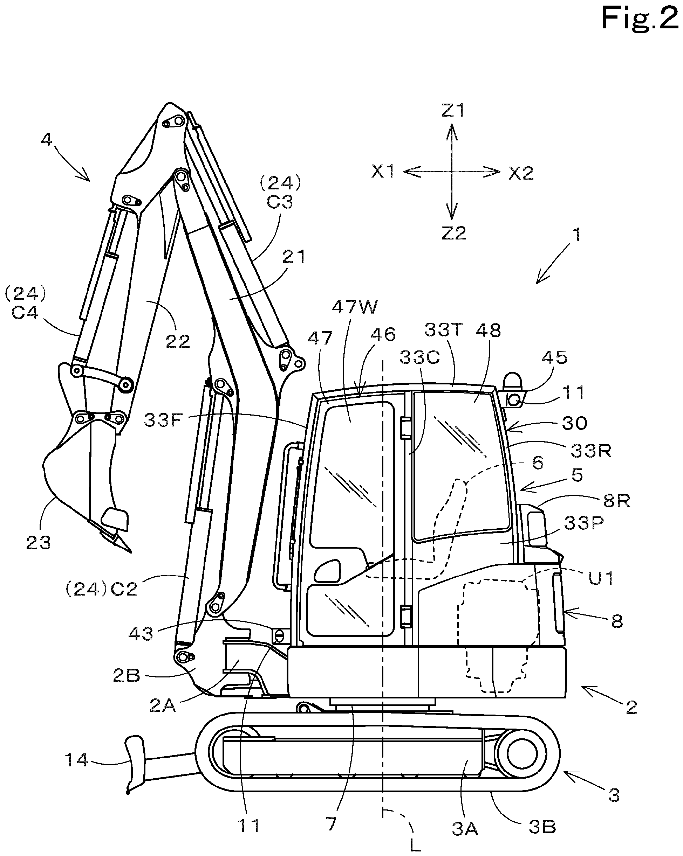

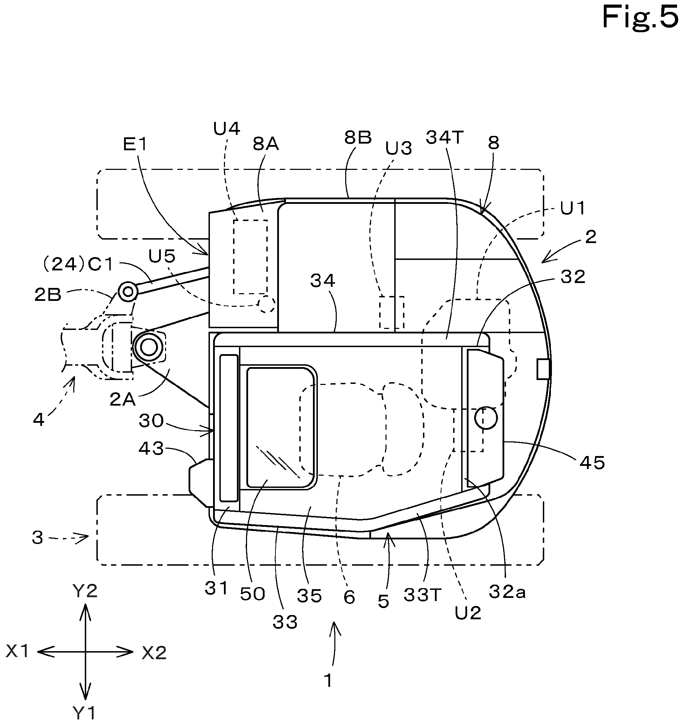

As illustrated in FIGS. 1 to 5, a working machine 1 of the present embodiment is a backhoe including a turning base (machine body) 2, a traveling device 3, and a working device 4. A cabin 5 is mounted on the turning base 2. As illustrated in FIGS. 2 and 5, an operator's seat 6 on which an operator is seated is provided inside the cabin 5. The working machine 1 is not limited to the backhoe, and may be a working machine of another type.

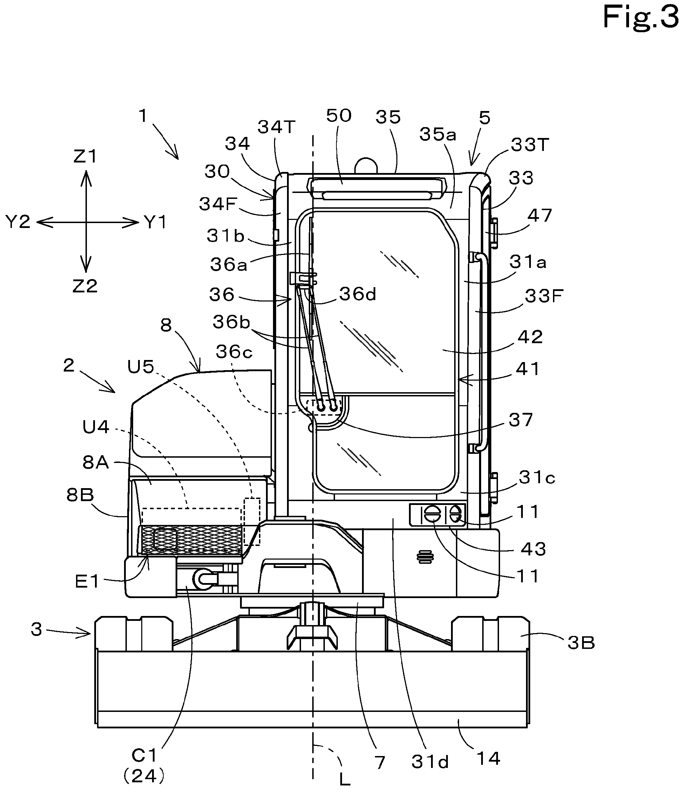

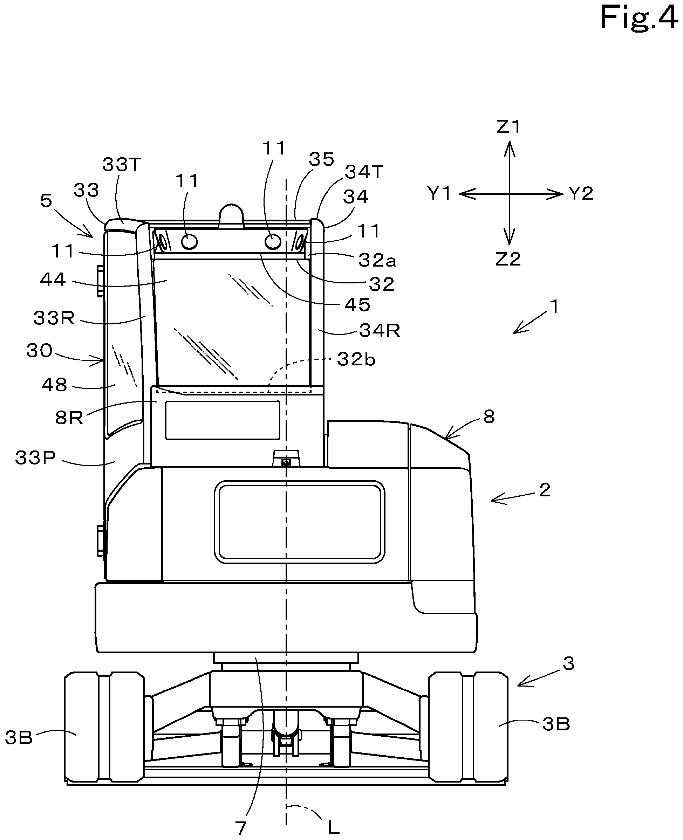

Hereinafter, a direction in which the operator seated on the operator's seat 6 faces (a direction of arrow X1 in FIGS. 1, 2, and the like) is referred to as front or a forward side of the turning base 2, and a direction opposite thereto (a direction of arrow X2 in FIGS. 1, 2, and the like) is referred to as rear or a rearward side of the turning base 2. Also, the left side of the operator (a direction of arrow Y1 in FIGS. 3, 4, and the like) is referred to as left or a leftward side of the turning base 2, and the right side of the operator (a direction of arrow Y2 in FIGS. 3, 4, and the like) is referred to as right or a rightward side of the turning base 2. Further, the upper side of the operator (a direction of arrow Z1 in FIGS. 1, 2, and the like) is referred to as an upward side of the turning base 2 or above the turning base 2, and the lower side of the operator (a direction of arrow Z2 in FIGS. 1, 2, and the like) is referred to as a downward side of the turning base 2 or below the turning base 2.

### <Machine Body>

As illustrated in FIGS. 2 to 4, the turning base (machine body) 2 is supported on an upper portion of the traveling device 3 via a turning bearing 7 so as to be turnable in a left-right direction. In other words, the turning base 2 is supported so as to be rotatable about a turning axis (an axis extending in an up-down direction) L relative to the traveling device 3. The turning axis L is the center of rotation of the turning bearing 7.

As illustrated in FIG. 5, a prime mover U1 is mounted in a rear portion of the inside of the turning base 2. The prime mover U1 is a diesel engine. Alternatively, the prime mover U1 may be a gasoline engine, may be an electric motor, or may be of a hybrid type including an engine and an electric motor. Additionally, a hydraulic pump U2 is connected to the prime mover U1. The hydraulic pump U2 is driven with power of the prime mover U1 and supplies a hydraulic fluid (pressure fluid) to hydraulic actuators such as a hydraulic motor (not illustrated) and a hydraulic cylinder 24 (described later) provided in the working machine 1. A compressor U3, a condenser U4, and a receiver U5 are mounted in a right portion of the inside of the turning base 2. The compressor U3, the condenser U4, and the receiver U5 are all devices constituting a portion of an air conditioning device (air conditioner) provided in the working machine 1. The compressor U3 is a device that compresses a refrigerant (air conditioner gas) into semi-liquid. The condenser U4 is a cooler that discharges heat of the refrigerant that has been semi-liquid in the compressor U3 to cool the refrigerant and to promote liquefaction. In the present embodiment, the condenser U4 is an electric condenser cooled by an electric fan. The receiver U5 is a device that stores the refrigerant liquefied in the condenser U4.

The turning base 2 includes an exterior cover 8 that covers devices and components such as the prime mover U1, the hydraulic pump U2, the compressor U3, the condenser U4, and the receiver U5. The exterior cover 8 includes a plurality of cover bodies. As illustrated in FIGS. 3, 5, and 6, the exterior cover 8 includes a condenser hood (front cover portion) 8A and a right side portion hood 8B constituting a right front portion of the turning base 2. The condenser hood 8A is a cover that covers the condenser U4 and the receiver U5 from above. The right side portion hood 8B is a cover that covers the condenser U4 and the receiver U5 from the right. The condenser hood 8A is detachably fixed to a fixing frame inside the turning base 2, and the condenser U4 and the receiver U5 can be inspected and maintained when the condenser hood 8A is detached. An air flow port E1 that is open forward of the turning base 2 is provided in a front lower portion of the condenser hood 8A. The air heated through heat exchange with the refrigerant in the condenser U4 is discharged forward and downward of the turning base 2 from the air flow port E1. As illustrated in FIGS. 1 to 6, the turning base 2 includes at least one work lamp 11 that illuminates a surrounding area of the turning base 2.

### <Traveling Device>

As illustrated in FIGS. 1 and 2, the traveling device 3 includes a traveling frame 3A and a traveling mechanism 3B. The traveling frame (track frame) 3A is a structure body to which the traveling mechanism 3B is attached and that supports the turning base 2 from below. The traveling mechanism 3B is of, for example, a crawler type. A dozer 14 is attached to a front portion of the traveling device 3. The traveling device 3 is not limited to of the crawler type, and may be of a wheel type.

### <Working Device>

The working device 4 is provided forward of the turning base 2 and is driven with the hydraulic fluid delivered from the hydraulic pump U2. The working device 4 is coupled to a support bracket 2A provided at a front portion of the turning base 2 via a swing bracket 2B. The swing bracket 2B is pivotally supported by a front portion of the support bracket 2A so as to be swingable about a vertical axis (an axis extending in the up-down direction).

The working device 4 includes a boom 21, an arm 22, and a bucket (working tool) 23. A proximal end portion of the boom 21 is pivotally supported by the swing bracket 2B so as to be swingable about a horizontal axis (an axis extending in the left-right direction). In other words, the boom 21 is pivotally coupled to the swing bracket 2B so as to be swingable in the up-down direction. A proximal end portion of the arm 22 is pivotally supported by a distal end portion of the boom 21 so as to be swingable about a horizontal axis (an axis extending in the left-right direction). In other words, the arm 22 is pivotally coupled to the boom 21 so as to be swingable in a front-rear direction and the up-down direction. A proximal end portion of the bucket 23 is pivotally supported by a distal end portion of the arm 22 so as to be swingable about a horizontal axis (an axis extending in the left-right direction). In other words, the bucket 23 is pivotally coupled to the arm 22 so as to be capable of performing shoveling and dumping. Instead of or in addition to the bucket 23, another working tool (hydraulic attachment) that can be driven with the hydraulic fluid can be attached to the working machine 1. Examples of the other working tool include a hydraulic breaker, a hydraulic crusher, an angle broom, an earth auger, a pallet fork, a sweeper, a mower, and a snow blower.

The working device 4 is driven by hydraulic cylinders 24. The hydraulic cylinders 24 include a swing cylinder C1, a boom cylinder C2, an arm cylinder C3, and a bucket cylinder C4. The swing bracket 2B is swingable by extension/contraction of the swing cylinder C1. The boom 21 is swingable by extension/contraction of the boom cylinder C2. The arm 22 is swingable by extension/contraction of the arm cylinder C3. The bucket 23 is capable of performing shoveling and dumping by extension/contraction of the bucket cylinder C4. As illustrated in FIGS. 3 and 5, the swing cylinder C1 is provided at a position close to the right of a lower portion of the turning base 2, and couples a machine body frame (not illustrated) of the turning base 2 and the swing bracket 2B. As illustrated in FIGS. 1 and 2, the boom cylinder C2 is provided at a proximal end portion of a lower surface of the boom 21 (a proximal end portion of a front surface of the boom 21 in a state of being raised upward), and couples the swing bracket 2B and the boom 21. The arm cylinder C3 is provided at a distal end portion of an upper surface of the boom 21 (a distal end portion of a rear surface of the boom 21 in the state of being raised upward), and couples the boom 21 and the arm 22. The bucket cylinder C4 is provided at an upper surface of the arm 22 (a front surface of the arm 22 in a state of being bent downward), and couples the arm 22 and the bucket 23.

### <Cabin>

As illustrated in FIGS. 3 to 5, the cabin 5 is disposed close to the left of the front portion of the turning base 2. In other words, the operator's seat 6 is disposed close to the left of the turning base 2. As illustrated in FIGS. 1 and 5, the cabin 5 includes a protective frame 30 that are vertically provided around the operator's seat 6, and the protective frame 30 includes a front frame 31 defining a front portion of the cabin 5, a rear frame 32 defining a rear portion of the cabin 5, a left frame 33 defining a left side portion of the cabin 5, and a right frame 34 defining a right side portion of the cabin 5. Additionally, a roof 35 defining an upper portion of the cabin 5 is provided at an upper portion of the protective frame 30.

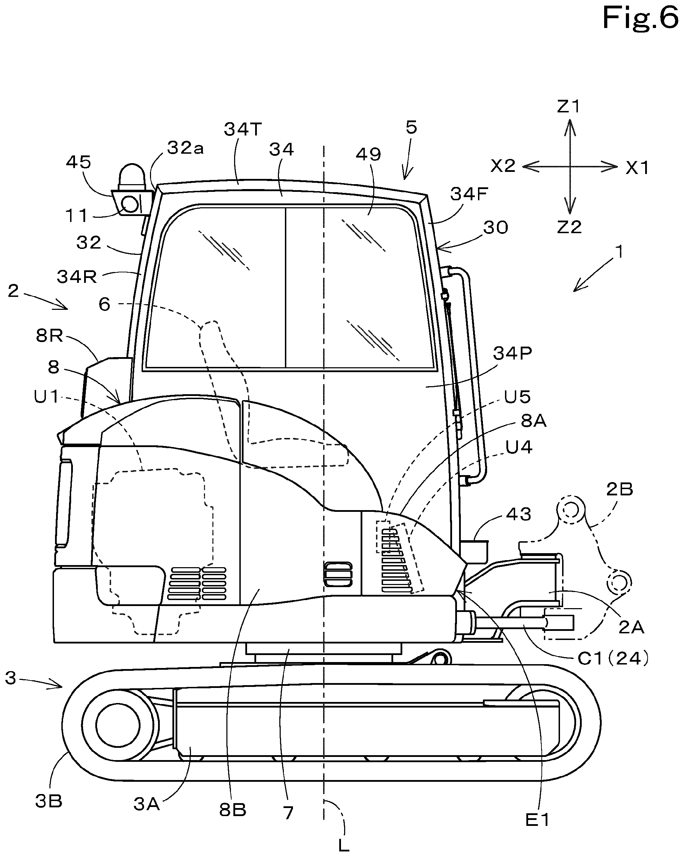

As illustrated in FIGS. 1 and 3, the front frame (window frame) 31 is provided with a wiper 36, a window opening 41, a front window 42, and a front lamp bracket 43. As illustrated in FIG. 4, the rear frame 32 is provided with a rear window 44 and a rear lamp bracket 45. As illustrated in FIGS. 1 and 2, the left frame 33 is provided with a riding entrance 46, a riding door 47, and a left rear window 48. As illustrated in FIG. 5, the right frame 34 is provided with a right window 49. As illustrated in FIG. 6, the right frame 34 is provided with a right window 49. As illustrated in FIGS. 1 and 5, the roof 35 is provided with a roof window 50.

As illustrated in FIG. 2, the left frame 33 includes a left front pillar 33F, a left rear pillar 33R, a center pillar 33C, a left upper frame 33T, and a left side panel 33P. The left front pillar 33F is vertically provided at a left front portion of the cabin 5. The left rear pillar 33R is vertically provided at a left rear portion of the cabin 5. The center pillar 33C is vertically provided between the left front pillar 33F and the left rear pillar 33R. The left upper frame 33T is laterally provided between upper ends of the left front pillar 33F and the left rear pillar 33R. The left side panel 33P extends between lower portions of the center pillar 33C and the left rear pillar 33R. The riding entrance 46 is defined by the left front pillar 33F, the center pillar 33C, and the left upper frame 33T. The riding door 47 is pivotally coupled to the center pillar 33C by a hinge or the like, and covers and closes the riding entrance 46 from the left. The left rear window 48 is fitted in an opening defined by the center pillar 33C, the left rear pillar 33R, the left upper frame 33T, and the left side panel 33P. Also, a door window 47W is fitted in the riding door 47 to occupy a substantially entire surface of the riding door 47. Therefore, the left rear window 48 and the door window 47W secure a left field of view of the operator.

As illustrated in FIG. 6, the right frame 34 includes a right front pillar 34F, a right rear pillar 34R, and a right upper frame 34T. The right front pillar 34F is vertically provided at a right front portion of the cabin 5. The right rear pillar 34R is vertically provided at a right rear portion of the cabin 5. The right upper frame 34T is laterally provided between upper ends of the right front pillar 34F and the right rear pillar 34R. A right side panel 34P is fitted into a region surrounded by the right front pillar 34F, the right rear pillar 34R, and the right upper frame 34T to occupy the substantially entire region. The right window 49 is fitted in an opening formed in the right side panel 34P, and secures a right field of view of the operator.

As illustrated in FIG. 3, the front frame 31 includes a left window frame portion 31a, a right window frame portion 31b, a lower window frame portion 31c, and a front lower frame 31d. The left window frame portion 31a extends in the up-down direction along the left front pillar 33F. The right window frame portion 31b extends in the up-down direction along the right front pillar 34F. The lower window frame portion 31c couples and supports lower ends of the left window frame portion 31a and the right window frame portion 31b. The front lower frame 31d is laterally provided between lower ends of the left front pillar 33F and the right front pillar 34F along a lower edge of the lower window frame portion 31c. Additionally, a wiper bracket 37 is connected to a right side edge of the lower window frame portion 31c (an inner right side edge of the window opening 41). The window opening 41 is defined in a substantially rectangular shape long in the up-down direction by the left window frame portion 31a, the right window frame portion 31b, the lower window frame portion 31d, and a front edge 35a of the roof 35. The wiper 36 is pivotally coupled to the wiper bracket 37 so as to be swingable. The front lamp bracket 43 is provided on a front surface portion of the front lower frame 31d. The front lamp bracket 43 is provided with work lamps 11 that illuminate the front and the left of the turning base 2.

As illustrated in FIG. 4, the rear frame 32 includes a rear upper frame 32a and a rear lower frame 32b. The rear upper frame 32a is laterally provided between the upper ends of the left rear pillar 33R and the right rear pillar 34R at a rear upper portion of the cabin 5. The rear lower frame 32b is located forward of a cover body 8R (a cover that covers a main body of the air conditioner mounted in the rear portion of the cabin 5) provided at the rear portion of the cabin 5, and is laterally provided between lower ends of the left rear pillar 33R and the right rear pillar 34R. The rear window 44 is fitted in an opening defined by the left rear pillar 33R, the right rear pillar 34R, the rear upper frame 32a, and the rear lower frame 32b, and secures a rear field of view of the operator. The rear lamp bracket 45 is provided on a rear surface portion of the rear upper frame 32a. The rear lamp bracket 45 is provided with work lamps 11 that illuminate the rear and the left and right of the turning base 2.

As illustrated in FIG. 5, the roof 35 is laterally provided between the left upper frame 33T and the right upper frame 34T, and covers the operator's seat 6 from above. The front edge 35a of the roof 35 extends to overlap the front portion of the cabin 5. In other words, the front edge 35a of the roof 35 defines an upper frame that is laterally provided between the upper ends of the left front pillar 33F and the right front pillar 34F at a front upper portion of the cabin 5. The left and right window frame portions 31a and 31b of the front frame 31 are connected to left and right lower end portions of the front edge 35a. The roof window 50 is provided at a position close to the front edge 35a of the roof 35, and secures a front upper field of view of the operator.

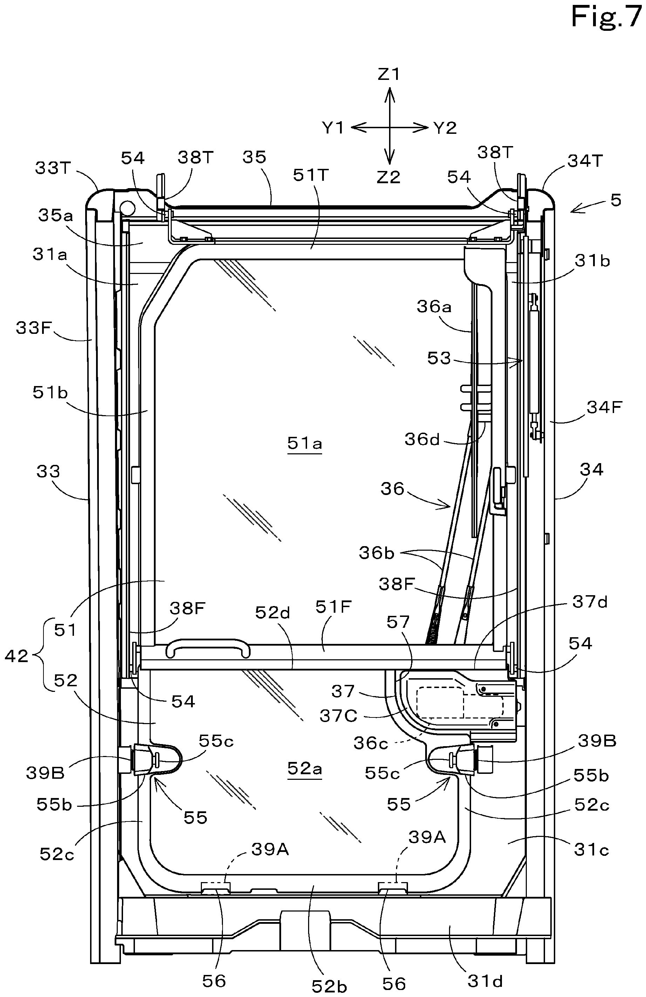

As illustrated in FIGS. 3 and 7, the wiper 36 includes a blade 36a, a pair of arms 36b, and a wiper drive unit (wiper drive) 36c. The wiper drive unit 36c is a device that swings the arms 36b by a wiper motor and a link mechanism (not illustrated), and is fixed to a rear surface portion of the wiper bracket 37. Also, the wiper drive unit 36c is entirely covered by a drive cover 37C provided on the rear surface portion of the wiper bracket 37. Proximal end portions of the arms 36b are pivotally coupled to the wiper drive unit 36c from a front surface of the wiper bracket 37. The proximal end portions of the two arms 36b are coupled to the front surface of the wiper bracket 37 to be laterally arranged in the left-right direction. Distal end portions of the two arms 36b are coupled to each other to be laterally arranged in the left-right direction by a coupling plate 36d. The blade 36a is coupled to and supported by the distal end portions of the arms 36b via the coupling plate 36d. The blade 36a extends in the up-down direction in a position close to the right window frame portion 31b on the front side of the window opening 41 in a stopped state (see FIG. 3). Also, when the arms 36b are swung leftward from this state, the blade 36a slides leftward and slightly obliquely downward along a front surface (outer surface) of an upper window portion 51 of the front window 42 in a state in which a blade end is in contact with the front surface of the upper window portion 51. In the present embodiment, the wiper 36 is a double-arm type (pantograph type) wiper device that swings the blade 36a by the two arms 36b. However, the wiper 36 may be a single-arm type wiper device that swings the blade 36a by one arm 36b.

In the case of the above-described double-arm type wiper device, when the wiper drive unit 36c serving as the proximal end is disposed too far on the outer side with respect to the central position in the left-right direction of the upper window portion 51, the blade 36a cannot be swung in a wide range along the front surface of the upper window portion 51, and the unwiped area increases. However, in the working machine 1 of the present embodiment, the wiper bracket 37 is provided to protrude from the right side edge of the lower window frame portion 31c toward the center in the left-right direction of the upper window portion 51, and the wiper drive unit 36c is provided on the wiper bracket 37. Accordingly, the blade 36a can be swung in a wider range along the front surface of the upper window portion 51.

The wiper bracket 37 is provided on the right side edge of the lower window frame portion 31c, at a position lower than the upper window portion 51. Also, the wiper bracket 37 is disposed on the right side edge of the lower window frame portion 31c, at a position located in substantially the same direction as the line of sight of the operator seated on the operator's seat 6 when the operator views the swing bracket 2B and lower than the height of the line of sight, in other words, at a position at which the wiper bracket 37 is seen overlapping the swing bracket 2B in the front-rear direction (see FIG. 3). Accordingly, the wiper bracket 37 and the wiper drive 36c are less likely to obstruct the field of view through the upper window portion 51, and hence the visibility of the front of the machine body (turning base) 2 for the operator is improved.

### <Front Window>

The front window 42 has an outer peripheral shape substantially the same as the shape of the window opening 41, and covers and closes the window opening 41 from the rear (the inner side of the cabin 5). The front window 42 includes an upper window portion 51 that covers and closes an upper half portion of the window opening 41, and a lower window portion 52 that covers and closes a lower half portion of the window opening 41. In this way, the front window 42 is divided into upper and lower portions. In the present embodiment, the upper window portion 51 is formed to have a size to cover and close a range of approximately upper three-fifths of the window opening 41, and the lower window portion 52 is formed to have a size to cover and close a range of approximately lower two-fifths of the window opening 41. However, the proportions of the ranges of the window opening 41 covered and closed by the upper window portion 51 and the lower window portion 52 are not limited to the above-described proportions.

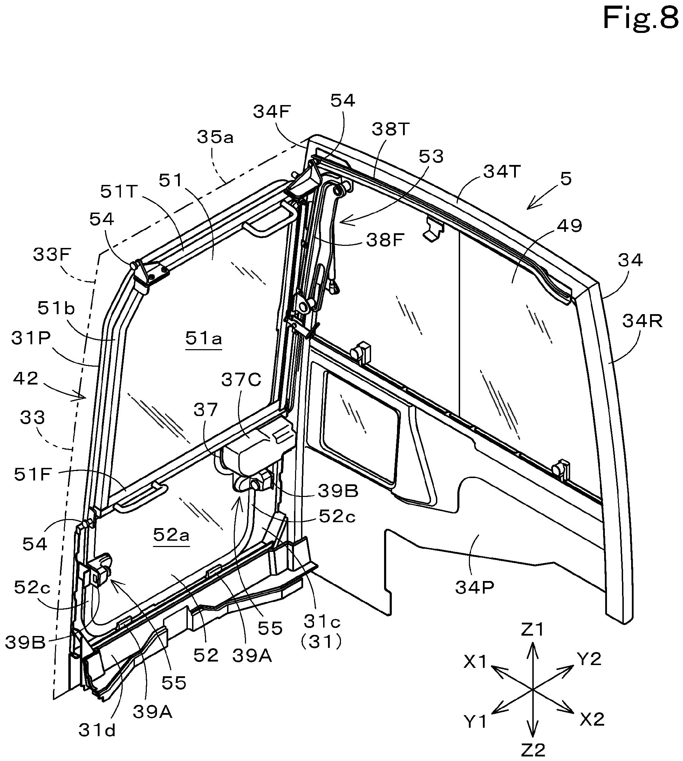

As illustrated in FIGS. 7 and 8, the upper window portion 51 includes a window plate 51a, an outer peripheral frame 51b, and at least one slider 54. The window plate 51a is formed of a transparent plate material such as glass or synthetic resin. The outer peripheral frame 51b extends along the outer periphery of the window plate 51a and holds the window plate 51a. The at least one slider 54 includes sliders 54 disposed at left and right side end portions of an upper edge (upper window upper edge) 51T and left and right side edges of a lower edge (upper window lower edge) 51F of the outer peripheral frame 51b.

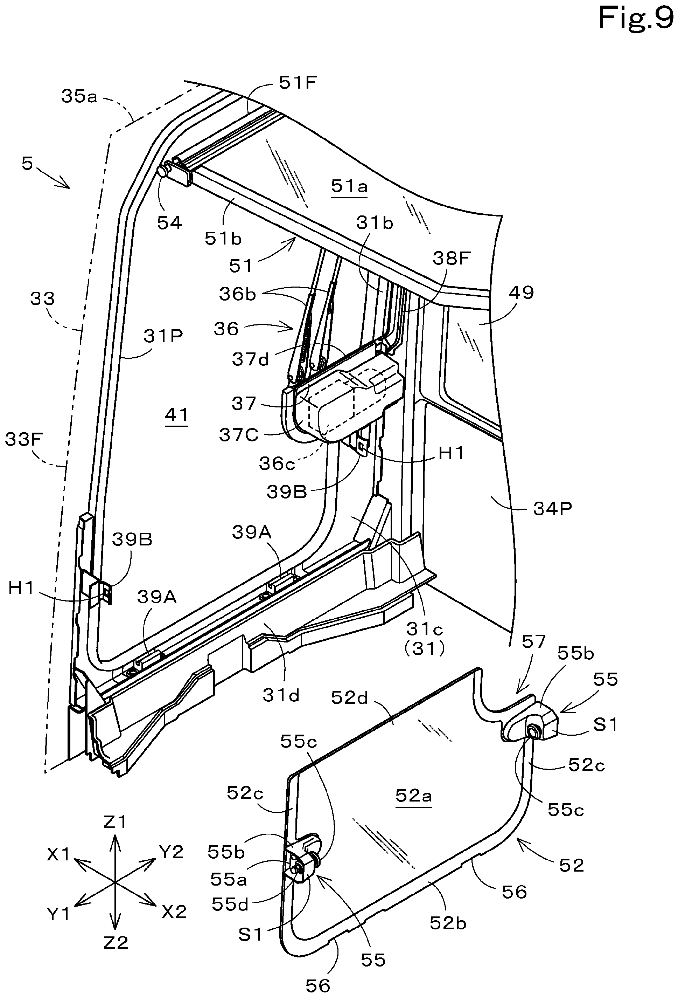

The sliders 54 near the upper window upper edge 51T are engaged with and held by upper portion rails 38T extending in the front-rear direction along positions close to left and right side edges of a lower surface of the roof 35. In contrast, the sliders 54 near the upper window lower edge 51F are engaged with and held by front portion rails 38F extending in the up-down direction along inner side surfaces of the left and right front pillars 33F and 34F. In other words, the upper edge 51T of the upper window portion 51 is engaged and held so as to be slidable in the front-rear direction at a lower surface portion of the roof 35, and the lower edge 51F of the upper window portion 51 is engaged and held so as to be slidable in the up-down direction at inner side portions of the front pillars 33F and 34F. Also, the upper window portion 51 is coupled and supported on the inner side of the right frame 34 via a link mechanism 53. Accordingly, the upper window portion 51 can be moved from a closed position arranged at a rear portion of the front frame 31 to an open position arranged at a lower portion of the roof 35 (the inner upper side of the cabin 5) by changing its posture from a raised state to a tilted state as the upper window portion 51 is lifted upward (see FIG. 9).

As illustrated in FIGS. 7 to 9, the lower window portion 52 includes a window plate 52a and at least one lock handle (lock) 55. The window plate 52a is formed of a transparent plate material such as glass or synthetic resin. The window plate 52a includes at least one first cutout 56 and a second cutout 57. The at least one cutout includes a pair of first cutouts 56 provided in a lower edge 52b of the lower window portion 52 to be spaced apart in the left-right direction. The first cutouts 56 are formed in rectangular U-shapes recessed toward the upper side of the window plate 52a, and are engaged from above with a pair of lower window stays 39A provided at a rear portion of the lower window frame portion 31c, at positions lower than the window opening 41 to be spaced apart in the right-left direction. Accordingly, the lower edge 52b of the lower window portion 52 is positioned and held at a rear portion of the window opening 41. The second cutout 57 is provided at an upper end position of a right side edge 52c of the lower window portion 52, in other words, in an upper right corner portion of the lower window portion 52. The second cutout 57 is formed in a substantially arc shape recessed toward the lower left of the window plate 52a, and is disposed along a lower left outer peripheral surface of the drive cover 37C of the wiper drive unit 36c. Accordingly, interference of the lower window portion 52 with the drive cover 37C is avoided when the lower window portion 52 is attached to or detached from the front frame (window frame) 31. When the lower window portion 52 is in the closed position, an upper edge 52d of the lower window portion 52 is arranged to be aligned with an upper edge 37d of the wiper bracket 37 in the left-right direction. In other words, the upper edge 37d of the wiper bracket 37 is provided at a position aligned in the left-right direction with the upper edge 52d of the lower window portion 52 in the closed position, and serves as an abutting end portion with respect to the upper window lower edge 51F when the upper window portion 51 is closed. Also, the wiper drive unit 36c fixed to the rear surface portion of the wiper bracket 37 is disposed on the front frame 31, at a position lower than the upper window portion 51.

The at least one lock handle 55 includes lock handles 55 disposed on left and right side edges 52c of a rear surface portion of the lower window portion 52. The two lock handles 55 are arranged at the same height position at the center in the up-down direction on the rear surface portion of the lower window portion 52. The lock handles 55 are configured to be fitted to a pair of lock receivers 39B provided on the rear portion of the lower window frame portion 31c, at positions located leftward and rightward of the window opening 41, and the left and right side edges 52c of the lower window portion 52 are fixed at the rear portion of the window opening 41 by the lock handles 55 being fitted to the lock receivers 39B.

As described above, the lower edge 52b of the lower window portion 52 is engaged with and held by the two lower window stays 39A, and the left and right side edges 52c are detachably fitted to and held by the two lock receivers 39B. Thus, after the fitting of the left and right lock handles 55 to the lock receivers 39B is released, by raising the upper edge 52d in a state of being slightly tilted rearward, the lower window portion 52 can be detached from the front frame 31 without interfering with the drive cover 37C. In contrast, after the lower edge 52d is engaged with the lower window stays 39A in a posture in which the upper edge 52d is slightly tilted rearward, by overlapping the lower window portion 52 with the rear portion of the front frame 31 so as to cover the window opening 41 from the rear, and by fitting the left and right lock handles 55 to the lock receivers 39B, the lower window portion 52 can be fixed to and held at the rear portion of the front frame 31 without interfering with the drive cover 37C. A gasket 31P is provided along the entire inner peripheral edge of the window opening 41, and the upper window portion 51 and the lower window portion 52 in the closed position are both held in close contact at the rear portion of the front frame 31 via the gasket 31P.

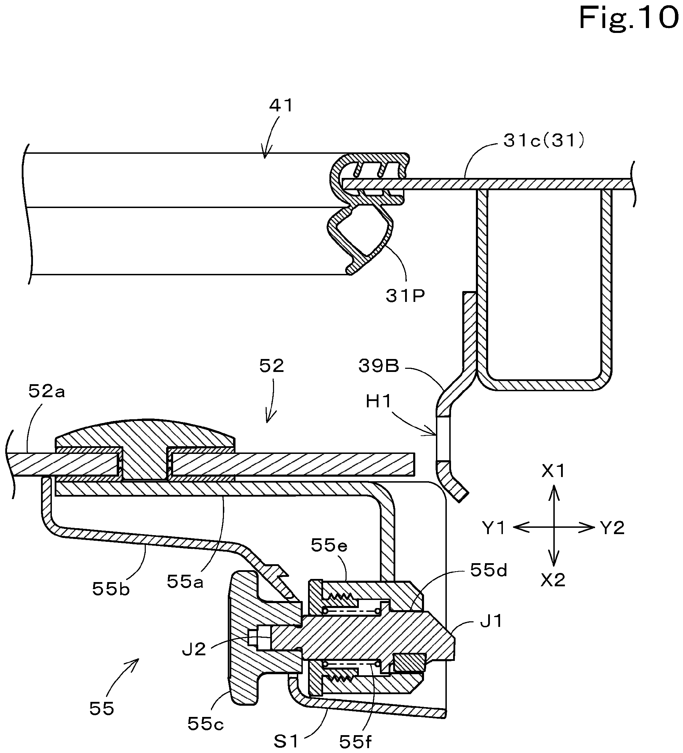

As illustrated in FIG. 10, each of the lock handles 55 includes a base plate 55a, a handle body (lock body) 55b, an operation knob (lock release operation element) 55c, a latch bolt 55d, a bolt case 55e, and an urging member 55f. The base plate 55a is a plate body formed by being bent in an L shape in a top view, and is fixed to a rear surface portion of the window plate 52a of the lower window portion 52. The handle body 55b is a cover body formed in an L shape in section in a top view and bulging rearward of a rear portion of the lower window portion 52, and is screwed and fixed to the base plate 55a to cover the entire base plate 55a. The operation knob 55c is provided at a side surface (inner side surface) of a bulging portion S1 of the handle body 55b near the center of the lower window portion 52. In other words, the two left and right operation knobs 55c are disposed at the left and right side edges 52c of the lower window portion 52 to face each other in the left-right direction.

The latch bolt 55d is a shaft body extending in the left-right direction, and is held inside the bolt case 55e so as to be slidable in the left-right direction. A distal end claw portion J1 of the latch bolt 55d is formed in a substantially right-angle triangular shape in section in a top view, having an inclined surface at the front. The bolt case 55e is a tubular body extending in the left-right direction, and the latch bolt 55d is inserted into a hollow portion on the inner side of the bolt case 55e. The distal end claw portion J1 of the latch bolt 55d protrudes outward from an end portion (outer side end portion) of the bolt case 55d near the outer side of the lower window portion 52. A rear end portion J2 of the latch bolt 55d protrudes outward from an end portion (inner side end portion) of the bolt case 55d near the center of the lower window portion 52, and the operation knob 55c is attached to the rear end portion J2. In other words, the operation knob 55c is coupled to the latch bolt 55d at the side surface (inner side surface) of the bulging portion S1 of the handle body 55b near the center of the lower window portion 52.

The urging member 55f is a coil spring, is annularly fitted on the outer periphery of the latch bolt 55d inside the bolt case 55e, and presses and urges the latch bolt 55d in the protruding direction of the distal end claw portion J1 (outward). Thus, when the inclined surface of the distal end claw portion J1 of the latch bolt 55d is pressed against the lock receiver 39B as a result of that the lower window portion 52 is overlapped with the rear portion of the front frame 31, the distal end claw portion J1 is pushed to the inner side of the bolt case 55e against the elastic force of the urging member 55f. Then, when the distal end claw portion J1 of the latch bolt 55d overlaps a latch fitting hole H1 of the lock receiver 39B as a result of that the lower window portion 52 is further pushed toward the rear portion of the front frame 31, the distal end claw portion J1 is spontaneously fitted into the latch fitting hole H1 by the elastic force of the urging member 55f. Accordingly, the lower window portion 52 is fixed to and held at the rear portion of the front frame 31. Also, when the operation knob 55c is pulled by hand from this state toward the center of the lower window portion 52 against the elastic force of the urging member 55f (release operation), the distal end claw portion J1 of the latch bolt 55d is drawn to the inner side of the bolt case 55e in conjunction with the operation of the operation knob 55c. Accordingly, the fitting state of the lower window portion 52 to the lock receiver 39B is released, and the lower window portion 52 can be detached. Thereafter, when the hand is released from the operation knob 55c, the distal end claw portion J1 spontaneously returns to the state of protruding outward of the bolt case 55d by the elastic force of the urging member 55f.

### <Other Embodiments>

In the above-described embodiment, the pair of lock handles (locks) 55 are disposed on both the left and right side edges 52c of the lower window portion 52. However, the lock 55 may be disposed on only one of the left and right side edges 52c of the lower window portion 52 as long as the lower window portion 52 can be appropriately held with respect to the front frame (window frame) 31.

Also, in the above-described embodiment, the lock handle 55 is configured such that the fitting to the lock receiver 39B is released by the release operation of the operation knob (lock release operation element) 55c. However, the lock handle 55 may be configured not to include the operation knob 55c and such that the fitting to the lock receiver 39B is released by another operation such as lifting the lock handle 55.

Also, in the above-described embodiment, the lock release operation by the operation knob 55c that is the pulling operation of moving the operation knob 55c toward the center in the left-right direction of the lower window portion 52 has been described. However, the operation knob 55c may be provided at a rear portion of the handle body (lock body) 55b, and the above-described release operation may be an operation of moving the operation knob 55c rearward. Alternatively, the operation knob 55c may be provided at an upper portion of the handle body 55c, and the above-described release operation may be an operation of moving the operation knob 55c upward. Also, the above-described release operation is not limited to the pulling operation, and may be a pushing operation, a sliding operation, a swinging operation, or a rotating operation as long as the fitting state between the lock handle 55 and the lock receiver 39B can be smoothly and safely released.

Also, in the above-described embodiment, the lock release operation element (operation knob) 55c provided at the lock handle 55 has been described. However, the lock release operation element 55c may be provided at the lock receiver 39B and may be configured such that the fitting between the lock handle 55 and the lock receiver 39B is released by a release operation of the lock release operation element 55c (for example, an operation of pushing the lock release operation element 55c toward the center in the left-right direction of the lower window portion 52).

### <Advantageous Effects>

As described above, in the present example embodiment, a cabin 5 is mounted on a working machine 1. The cabin 5 includes a protective frame 30 vertically provided around an operator's seat 6 included in the working machine 1; a roof 35 provided at an upper portion of the protective frame 30; and a front window 42 provided at a front portion of the protective frame 30. The front window 42 is vertically divided into an upper window portion 51, which is coupled to a window frame (front frame) 31 at the front portion of the protective frame 30 so as to be movable toward a lower surface of the roof 35, and a lower window portion 52 detachably coupled to the window frame 31. The window frame 31 includes a lower window stay 39A to engage with and support a lower edge 52b of the lower window portion 52, and a lock receiver 39B to hold a side edge 52c of the lower window portion 52 in a closed position. The lower window portion 52 includes at least one lock (lock handle) 55 to be fitted to the lock receiver 39B when the side edge 52c of the lower window portion 52 is overlapped with the window frame 31.

According to this configuration, the front window 42 can be fully opened by opening the upper window portion 51 toward the lower surface of the roof 35 (the inner upper side of the cabin 5), releasing the fitting state between the lock 55 and the lock receiver 39B, and detaching the lower window portion 52 from the window frame 31. Moreover, since the lower window portion 52 is detachable and openable as described above, it is not necessary to secure a space for accommodating the lower window portion 52 and the members belonging thereto near the lower surface (ceiling portion) of the roof 35. Hence the head clearance in the cabin 5 can be increased by that amount. Moreover, the lower window portion 52 can be detached from the window frame 31 by tilting the lower window portion 52 forward/backward with the lower edge 52b serving as a fulcrum, and hence the front window 42 can be fully opened more easily than in a configuration in which the lower window portion is detached by sliding the lower window portion upward/downward along the window frame.

Also, the at least one lock 55 includes a plurality of locks 55 disposed on both left and right side edges 52c of the lower window portion 52. According to this configuration, it is not necessary to provide another structure such as a locking mechanism or a frame between the upper window portion 51 and the lower window portion 52, it is possible to adopt a structure in which the entire window frame 31 is largely opened when the front window 42 is fully opened.

Additionally, the lock 55 or the lock receiver 39B includes a lock release operation element (operation knob) 55c to manually release fitting between the lock 55 and the lock receiver 39B, such that the fitting between the lock 55 and the lock receiver 39B is released by a release operation of the lock release operation element 55c. According to this configuration, the lower window portion 52 can be easily detached from the window frame 31 by the lock release operation element 55c being operated, and thus the front window 42 can be fully opened more quickly and easily.

Additionally, the lock 55 includes a lock body (handle body) 55b to support the lock release operation element 55c. The lock body 55b is provided to bulge rearward on a rear portion of the lower window portion 52. According to this configuration, when the lower window portion 52 is detached from the window frame 31 by the lock release operation element 55c being operated, the lower window portion 52 can be lifted by the lock body 55b being gripped. Hence the front window 42 can be fully opened more quickly and easily.

Also, the lock release operation element 55c is provided at a side portion of the lock body 55b near a center in a left-right direction of the lower window portion 52. The release operation is a pulling operation of moving the lock release operation element 55c toward the center in the left-right direction of the lower window portion 52. According to this configuration, the direction in which the lock release operation element 55c is operated is different from the direction in which the lower window portion 52 is lifted and detached from the window frame 31, and hence it is possible to prevent or reduce unintentional detachment of the lower window portion 52 from the window frame 31 during cleaning or another work.

Also, the lower window portion 52 includes at least one first cutout 56 to engage with the lower window stay 39A and to inhibit the lower window portion 52 from moving in a left-right direction. According to this configuration, the lower window portion 52 is positioned and held by the window frame 31 by the first cutout 56 being engaged with the lower window stay 39A, and hence the front window 42 can be fully closed quickly and easily. Thus, the opening/closing operability is also markedly improved.

Also, the at least one first cutout 56 includes a pair of first cutouts 56 disposed in the lower edge 52b of the lower window portion 52 to be spaced apart in the left-right direction. According to this configuration, the lower window portion 52 is appropriately positioned and held by the window frame 31, and hence the front window 42 can be fully closed more quickly and easily. Thus, the opening/closing operability is further improved.

Additionally, the cabin 5 includes a wiper 36 to wipe an outer surface of the upper window portion 51. The wiper 36 includes a blade 36a in contact with the outer surface, an arm 36b to support the blade 36a slidably along the outer surface, and a wiper drive (wiper drive unit) 36c to swing the arm 36b. The wiper drive 36c is provided on the window frame 31, at a position close to an outside of the window frame 31 in the left-right direction.

In the case where the wiper drive 36c is provided on the upper window portion 51, it is necessary to secure a space capable of accommodating the wiper drive 36c between the upper window portion 51 in the open position and the lower surface portion of the roof 35, to avoid the wiper drive 36c from interfering with the roof 35 when the upper window portion 51 is opened toward the lower surface of the roof 35 (the inner upper side of the cabin 5). Accordingly, the head clearance in the cabin 5 is decreased by that amount. In the case where the wiper drive 36c is provided on the lower window portion 52, it is difficult to configure the lower window portion 52 to be detachable due to problems such as electrical wiring and weight, and thus, it is not possible to configure the front window 42 to be fully openable.

In the vehicle cabin 5 of the above-described example embodiment, the wiper drive 36c is provided on the window frame 31, at the position close to the outside of the window frame 31 in the left-right direction, and hence the lower window portion 52 can be easily detached from the window frame 31. In other words, the front window 42 can be easily fully opened. Also, with this configuration, it is not necessary to secure the space capable of accommodating the wiper drive 36c between the upper window portion 51 in the open position and the lower surface portion of the roof 35, and hence the head clearance in the cabin 5 can be increased by that amount.

Also, the wiper drive 36c is provided on the window frame 31, at a position lower than the upper window portion 51. According to this configuration, the wiper drive 36c is less likely to obstruct the field of view through the upper window portion 51, and hence the visibility of the front of the machine body (turning base) 2 for the operator is improved.

Additionally, the window frame 31 includes a wiper bracket 37 to support the wiper drive 36c. An upper edge 37d of the wiper bracket 37 is aligned in the left-right direction with an upper edge 52d of the lower window portion 52 when in the closed position, and is provided as an abutting end portion to abut against a lower edge 51F of the upper window portion 51. According to this configuration, it is not necessary to provide a frame between the upper window portion 51 and the lower window portion 52, and hence it is possible to adopt a structure in which the entire window frame 31 is largely opened when the front window 42 is fully opened. Also, when the front window 42 is fully closed, the sealing performance between the upper window portion 51 and the lower window portion 52 can be enhanced.

Additionally, the wiper bracket 37 includes a drive cover 37C to cover the wiper drive 36c. The lower window portion 52 includes a second cutout 57 to avoid interference with the drive cover 37C when the lower window portion 52 is attached to or detached from the window frame 31. According to this configuration, when the lower window portion 52 is attached to or detached from the window frame 31, interference with the drive cover 37C can be avoided, and hence the front window 42 can be fully opened more quickly and easily.

Also, the lock 55 is fitted to the lock receiver 39B by the side edge 52c being pressed against the window frame 31 from an inner side to an outer side of the cabin 5 in a state in which the lower edge 52b of the lower window portion 52 is supported by the lower window stay 39A. According to this configuration, the lower window portion 52 can be attached to the window frame 31 so as to be tilted forward/backward with the lower edge 52b serving as a fulcrum, and thus the front window 42 can be easily fully closed.

Also, a working machine 1 of the present example embodiment includes a machine body (turning base) 2; a working device 4 provided at the machine body 2; and the cabin 5 configured as described above. According to this configuration, it is possible to provide a working machine in which it is possible to fully open the front window 42 while preventing or reducing a decrease in head clearance in the cabin 5.

While the present invention has been described above, it should be understood that the embodiments disclosed herein are examples in all points and are not restrictive. The scope of the present invention is defined not by the above description but by the claims, and is intended to include all modifications within the meaning and scope equivalent to the claims.

Also, in the above-described embodiments, the example has been described in which the present invention is applied to the working machine such as a backhoe. However, an application target of the present invention is not limited to the working machine such as a backhoe, and may be applied to a construction machine such as a wheel loader, a compact track loader, or a skid-steer loader, or may be applied to an agricultural machine such as a tractor, a combine, a rice transplanter, or a lawn mower.

### Reference Signs List

- 1: working machine

- 2: turning base (machine body)
- 3: traveling device
- 4: working device
- 5: cabin
- 6: operator's seat
- 30: protective frame
- 31: front frame (window frame)
- 35: roof
- 36: wiper
- 36a: blade
- 36b: arm
- 36c: wiper drive unit (wiper drive)
- 37: wiper bracket
- 37C: drive cover
- 39A: lower window stay
- 39B: lock receiver
- 42: front window
- 51: upper window portion
- 52: lower window portion
- 52b: lower edge
- 52c: side edge
- 55: lock
- 55b: handle body (lock body)
- 55c: operation knob (lock release operation element)
- 56: first cutout
- 57: second cutout

## Claims

1. A cabin mounted on a working machine, comprising:
a protective frame vertically provided around an operator's seat included in the working machine;
a roof provided at an upper portion of the protective frame; and
a front window provided at a front portion of the protective frame, wherein
the front window is vertically divided into an upper window portion, which is coupled to a window frame at the front portion of the protective frame so as to be movable toward a lower surface of the roof, and a lower window portion detachably coupled to the window frame,
the window frame includes a lower window stay to engage with and support a lower edge of the lower window portion, and a lock receiver to hold a side edge of the lower window portion in a closed position, and
the lower window portion includes at least one lock to be fitted to the lock receiver when the side edge of the lower window portion is overlapped with the window frame.

2. The cabin according to claim 1, wherein the at least one lock includes a plurality of locks disposed on both left and right side edges of the lower window portion.

3. The cabin according to claim 2, wherein the lock or the lock receiver includes a lock release operation element to manually release fitting between the lock and the lock receiver, such that the fitting between the lock and the lock receiver is released by a release operation of the lock release operation element.

4. The cabin according to claim 3, wherein
the lock includes a lock body to support the lock release operation element, and
the lock body is provided on a rear portion of the lower window portion to bulge rearward.

5. The cabin according to claim 4, wherein
the lock release operation element is provided at a side portion of the lock body near a center in a left-right direction of the lower window portion, and
the release operation is a pulling operation of moving the lock release operation element toward the center in the left-right direction of the lower window portion.

6. The cabin according to claim 1, wherein the lower window portion includes at least one first cutout to engage with the lower window stay and to inhibit the lower window portion from moving in a left-right direction.

7. The cabin according to claim 6, wherein the at least one first cutout includes, on the lower edge of the lower window portion, a pair of first cutouts spaced apart from each other in the left-right direction.

8. The cabin according to claim 1, comprising:
a wiper to wipe an outer surface of the upper window portion, wherein
the wiper includes a blade in contact with the outer surface, an arm to support the blade slidably along the outer surface, and a wiper drive to swing the arm, and
the wiper drive is provided on the window frame, at a position close to an outside of the window frame in the left-right direction.

9. The cabin according to claim 8, wherein the wiper drive is provided on the window frame, at a position lower than the upper window portion.

10. The cabin according to claim 9, wherein
the window frame includes a wiper bracket to support the wiper drive, and
an upper edge of the wiper bracket is aligned in the left-right direction with an upper edge of the lower window portion when in the closed position and is provided as an abutting end portion to abut against a lower edge of the upper window portion.

11. The cabin according to claim 10, wherein
the wiper bracket includes a drive cover to cover the wiper drive, and
the lower window portion includes a second cutout to avoid interference with the drive cover when the lower window portion is attached to or detached from the window frame.

12. The cabin according to claim 1, wherein the lock is fitted to the lock receiver by the side edge being pressed against the window frame from an inner side to an outer side of the cabin in a state in which the lower edge of the lower window portion is supported by the lower window stay.

13. A working machine comprising:
a machine body;
a working device provided on the machine body; and
the cabin according to any one of claims 1 to 12.
